# EUROPÄISCHE PATENTANMELDUNG

(11) **EP 0 621 735 A2**
(43) Veröffentlichungstag der Anmeldung: **26.10.1994**
(21) Anmeldenummer: 94105481.9
(22) Anmeldetag: 08.04.1994
(51) Int. Cl.: H04Q 9/00, H01H 13/02

(54) **Befehls-, Melde- und/oder Schaltgerät**

(30) Priorität: 19.04.1993 DE 4312623
(71) Anmelder: schaeper AUTOMATION GmbH, D-30559 Hannover (DE)
(72) Erfinder: Schaeper, Elard, D-30559 Hannover (DE); Föhse, Martin Dr.-Ing., D-30179 Hannover (DE)
(74) Vertreter: Glawe, Delfs, Moll & Partner

(57) **Zusammenfassung**

Beim Verfahren zum Einrichten eines Geräts mit mehreren Melde- und/oder Befehlseinheiten werden von einer Zentralstation jeweils die der zu adressierenden Einheit entsprechende Funktion oder zuzuordnenden Anschlußklemmen angezeigt. Wird diese Einheit dann z.B. durch Niederdrücken einer Taste betätigt, so wird in diese Einheit die von der Zentralstation vorbestimmte Adresse eingespeichert. Das komplizierte Einstellen von Adressen beim Einrichten des Geräts ist daher nicht erforderlich. Bei Anzeigelampen, die über eine Elektronik betrieben werden, kann die Elektronik in der Lampenfassung angeordnet sein. Im Gerät können Lampen verwendet werden, die berührungslos mit Hilfe eines reflektierten Lichtstrahles einen Schaltzustand melden.

## Beschreibung

Die Erfindung betrifft ein Befehls-, Melde- und/oder Schaltgerät, ein Verfahren zum Einrichten eines solchen Geräts sowie Befehls-, Melde- und Schalteinheiten für solche Geräte.

Geräte dieser Art werden für eine große Anzahl von Steuerungs-, Regelungs-, Meß-, Überwachungszwecken und viele andere Zwecke verwendet. Sie weisen eine häufig größere Anzahl von Einheiten auf, z.B. Befehlseinheiten in Form von Tastern oder Schaltern, Meldeeinheiten in Form von Lampen, Hupen, Sirenen und Schalteinheiten, mit denen z.B. Stromkreise ein- und ausgeschaltet werden können. Konventionell hat man früher jede einzelne Einheit direkt oder über Koppelrelais mit jeweils einem eigenen Kabel mit den zu schaltenden Geräten oder den Meldungsgebern verbunden. Die Nachteile dieser Anordnung von vielen Kabeln sind einerseits die hohen Kosten und der große Platzbedarf und andererseits, daß sie sehr viel Arbeit und die Möglichkeit von Irrtümern bei der Installation mit sich bringen.

Um diese Nachteile zu vermeiden, ist es bekannt, die einzelnen Einheiten über Bussysteme miteinander zu verbinden, wobei dann die einzelnen Einheiten mit Adressen versehen werden, so daß sie von einer Zentralstation angesprochen werden können (DE-AS 19 55 049). Der Nachteil besteht aber immer noch darin, daß das Einrichten kompliziert ist und die Anlage wenig flexibel ist. Es müssen nämlich an jeder der Einheiten die Adressen manuell eingestellt werden, was leicht zu Fehlern führen kann. Sollen einzelne Einheiten ausgewechselt werden, so müssen sie von der Busleitung getrennt werden, und bei der neuen Einheit muß die Adresse wieder neu eingestellt werden. Solche Anordnungen können auch normalerweise nicht in bestehende Systeme eingebaut werden, da kein Platz für die erforderliche Elektronik in den einzelnen Einheiten vorliegt. Kompliziert wird das Auswechseln insbesondere dann, wenn kombinierte Melde- und Befehlseinheiten, also etwa Leuchtschalter ausgewechselt werden sollen.

Die Erfindung ist ganz allgemein darauf gerichtet, die erwähnten Probleme zu beseitigen. Die Aufgabe der Erfindung besteht darin, ein Verfahren und eine Vorrichtung zu schaffen, die den einfachen, vielseitigen und flexiblen Aufbau und Betrieb eines Gerätes der eingangs genannten Art ermöglicht.

Eine erfindungsgemäße Lösung besteht bei einem Verfahren zum Einrichten eines Befehls-, Melde- und/oder Schaltgeräts mit Befehlseinheiten, Meldeeinheiten und/oder Schalteinheiten, die über ein Bussystem mit einer Zentralstation verbunden sind, bei dem jeder Befehls-, Melde- und/oder Schalteinheit eine Adresse zugeordnet ist, darin, daß die Zentralstation jeweils die der zu adressierenden Einheit entsprechende Funktion oder zuzuordnende Anschlußklemmen anzeigt, daß die Einheit betätigt und/oder manipuliert wird und daß daraufhin in diese Einheit die von der Zentralstation vorbestimmte Adresse eingespeichert wird.

Es ist also nicht mehr notwendig, an den einzelnen Einheiten mühsam von Hand mit den entsprechenden Irrtumsmöglichkeiten die Adresse einzustellen. Vielmehr zeigt die Zentralstation an, welche Funktion oder Anschlußklemme gerade einer Einheit zugeordnet werden soll. Wird dann eine Befehls-, Melde- oder Schalteinheit betätigt und/oder manipuliert, so wird in dieser Einheit automatisch die von der Zentralstation gesendete Adresse eingespeichert.

Die Betätigung der Einheit kann bei Tastern oder Schaltern in der Betätigung dieser Taster oder Schalter liegen. Die Einheit stellt dann fest, daß der oder die Taster oder Schalter betätigt worden ist bzw. sind und kann die von der Zentralstation gesendete Adresse speichern.

Bei einer anderen vorteilhaften Ausführungsform ist die Elektronik der Befehlseinheiten mit einem kleinen Taster, Schalter oder dergleichen versehen. Diese können dann von der Seite des Tableaus, an der die Elektronik jeweils angeordnet ist, das heißt normalerweise der Rückseite betätigt werden, um die zu adressierende Einheit zu identifizieren. Es ist dann bei großen Tableaus nicht erforderlich, jeweils vom Installationsarbeitsort (der Rückseite) zur Vorderseite des Tableaus zu gehen, um den entsprechenden Schalter zu betätigen. Bei einer anderen vorteilhaften Ausführungsform wird die Elektronik der Befehlseinheit mit einer Kurzschlußbrücke versehen, was natürlich ebenfalls von hinten geschehen kann, so daß vergleichbare Vorteile erhalten werden.

Bei einer Meldeeinheit wird vorteilhafterweise vorgesehen, daß der Signalgeber entfernt oder durch ein anderes Element ersetzt wird. Z.B. könnte man bei einer Meldeleuchte die Lampe entfernen und/oder zusätzlich einen Kurzschluß erzeugen oder aber einen Codierstecker in die Lampenfassung einsetzen. Wenn der Signalgeber nicht auf einfache Weise entfernt werden kann, kann das andere Element parallel zum Signalgeber geschaltet werden.

Damit die einrichtende Person weiß, welche Funktion oder Anschlußklemme als nächstes einer Einheit zugeordnet werden soll und welche Einheit deswegen betätigt werden soll, wird vorteilhafterweise vorgesehen, daß die entsprechende Funktion oder Anschlußklemme mit einer Lampe auf der Zentralstation angezeigt wird, z.B. in der Nähe dieser Klemme, die der entsprechenden Einheit zugeordnet werden soll.

Bei einer anderen vorteilhaften Ausführungsform wird die zuzuordnende Funktion oder Anschlußklemme auf einer Klartextanzeige angezeigt. Diese Klartextanzeige kann zweckmäßigerweise über eine flexible Leitung oder aber über die Busleitung mit der Zentralstation verbunden sein, so daß das Betätigen der entsprechenden Einheit auch in größerer Entfernung von der Zentralstation stattfinden kann.

Damit nicht beim Auswechseln von Einheiten Irrtümer auftreten können, kann zweckmäßigerweise vorgesehen sein, daß nur Einheiten mit einer voreingestellten vorgegebenen Adresse, z.B. der Adresse 00, mit einer neuen Adresse versehen werden. Auf diese Weise kann verhindert werden, daß bei Auswechseln einer Einheit aus Versehen eine nicht ausgewechselte bereits adressierte Einheit mit einer neuen Adresse versehen wird.

Die Aufgabe der Erfindung, eine möglichst einfache Anordnung zu schaffen, wird auch durch eine Anlage zur Durchführung des Verfahrens gelöst, bei der die Stromversorgungsleitungen für die Einheiten die Busleitungen sind. Es sind also keine separaten Stromversorgungsleitungen für die Befehls-, Melde- und/oder Schalteinheiten erforderlich, was den Aufbau der Anlage wesentlich erleichtert.

Nicht nur bei Anlagen, in deren Befehls-, Melde- und/oder Schalteinheiten die oben beschriebene Elektronik eingebaut ist, sondern auch bei Anlagen mit konventionellen Einheiten, die eine Lampenfassung besitzen, kann erfindungsgemäß eine wesentliche Vereinfachung erreicht werden. Dies wird erzielt, indem in diese Lampenfassung eine Lampe eingesetzt wird, die dadurch gekennzeichnet ist, daß sie im Lampengehäuse eine Elektronik aufweist, die über ein Bussystem adressierbar ist. Sieht man dies vor, so können auch konventionelle Einheiten leicht umgerüstet werden, ohne daß zusätzlicher Platz für die Elektronik erforderlich ist bzw. ohne daß zusätzliche andere aufwendige Arbeiten erforderlich sind. Es treten in diesem Falle keinerlei Platzprobleme auf, da die erfindungsgemäße Lampe einschließlich Elektronik nur die gleiche Größe hat wie eine normale Lampe.

Nicht nur bei den vorgenannten Anwendungen kann eine weitere erfindungsgemäße Lösung der Aufgabe der Erfindung Anwendung finden. Es handelt sich dabei um eine Befehls- und Meldeeinheit mit einer Lampe und einer dieselben abdeckenden, zur Betätigung in Richtung der Lampe drückbaren Tastenkappe, die vor der Lampe angeordnet ist, wobei erfindungsgemäß vorgesehen ist, daß im Lampengehäuse eine zur Kappe hin strahlende Leuchtdiode mit zur Bewegungsrichtung der Kappe schrägem Strahlengang sowie ein Detektor für das Diodenlicht angeordnet sind, der nur Diodenlicht bei betätigter Tastenkappe empfängt. In diesem Falle kann eine Umrüstung vorgenommen werden, ohne daß man durch die Tastenkappe betätigte Kontakte benötigt. Es wird vielmehr eine Lampe eingesetzt, die mit der Kappe nicht in Berührung steht und deswegen an dieselbe auch nicht besonders angepaßt zu werden braucht. Die Lampe stellt berührungslos fest, ob die Tastenkappe niedergedrückt ist und damit die Befehlseinheit betätigt worden ist. Auf diese Weise kann eine konventionelle Einheit ohne bauliche Veränderung lediglich durch Einsetzen der beschriebenen Lampe mit Elektronik ebenfalls an ein Zweileiter-Bussystem angeschlossen werden.

In allen Fällen, in denen die Einheiten über ein Busleitungssystem mit der Zentralstation verbunden sind, ist es besonders vorteilhaft, wenn die Einheiten über Brückengleichrichter mit den Busleitungen verbunden sind. In diesem Falle spielt es nämlich keine Rolle, mit welcher Polarität die Einheiten angeschlossen werden. Die Einheiten erhalten trotzdem immer die richtige Polarität zur Versorgung. Die Adress- und Steuersignale werden durch diesen Brückengleichrichter nicht wesentlich behindert.

Da die Einheiten elektronische Schaltungen aufweisen, kann erfindungsgemäß auch auf sehr einfache Weise erreicht werden, daß die Einheiten Strombegrenzungsschaltungen für die Lampen aufweisen, um so für die Lebensdauer schädliche erhöhte Einschaltströme zu vermeiden.

Wenn die Meldeeinheiten einen Fensterkomparator für den Lampenstrom aufweisen, so können zu hohe oder zu niedrige Ströme detektiert werden. Zu niedrige Ströme (bzw. der Strom 0) oder zu hohe Ströme (z.B. bei Kurzschluß) bei normaler Betriebsart des Bussystems würden eine defekte Lampe bedeuten, während ein zu hoher Strom im Einrichtbetrieb des Bussystems einen Kurzschluß für die Adressierung anzeigen würde.

Die Erfindung wird im folgenden anhand von vorteilhaften Ausführungsformen unter Bezugnahme auf die beigefügten Zeichnungen beschrieben. Es zeigen:
- Fig. 1: das Prinzipschaltbild einer erfindungsgemäß aufgebauten Anlage;
- Fig. 2: das Prinzipschaltbild einer Melde- und Befehlseinheit der Fig. 1;
- Fig. 3: den prinzipiellen Aufbau einer erfindungsgemäßen Lampe; und
- Fig. 4: den prinzipiellen Aufbau einer anderen erfindungsgemäßen Lampe.

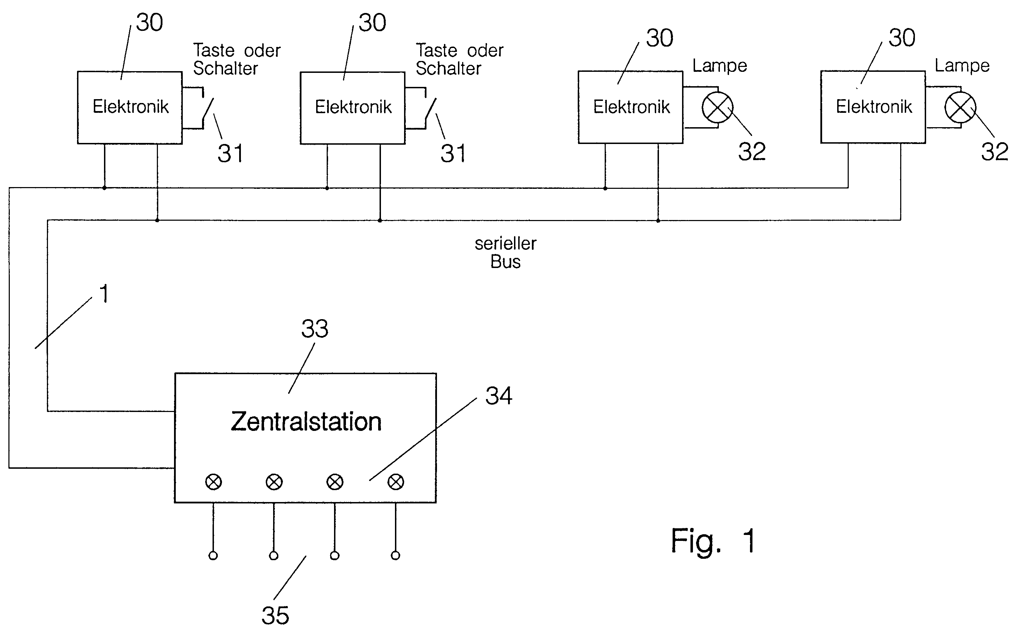

In Fig. 1 ist der prinzipielle Aufbau einer Anlage der Erfindung gezeigt. Eine Zentralstation 33 ist mit vier Einheiten verbunden, von denen zwei Befehlseinheiten mit Tastern oder Schaltern 31 und zwei Meldeeinheiten mit Lampen 32 versehen sind. Jede dieser Einheiten weist eine Elektronik 30 auf. Die Zentralstation 33 ist mit diesen Einheiten über eine serielle Busleitung 1 mit den Einheiten verbunden. Die Zentralstation 33 weist weiter Klemmen 35 auf, die durch die Adressierung den einzelnen Einheiten zugeordnet sind und an denen Schaltkontakte zur Verfügung stehen oder mit denen externe Meldesignale oder Meßwerte an die Zentralstation übermittelt werden. Jeder dieser Klemmen 35 ist eine Leuchtdiode 34 zugeordnet.

Die Einrichtung der Anlage geschieht dadurch, daß die Zentralstation auf Einrichtbetrieb umgeschaltet wird, und dann nacheinander die Leuchtdioden 34 an den einzelnen Klemmen aufleuchten, so daß die Bedienungsperson weiß, welche Klemme als nächste einer Einheit zugeordnet werden soll. Die Bedienungsperson betätigt dann die Taste oder den Schalter 31 der entsprechenden Einheit oder ersetzt die Lampe 32 der Einheit durch einen Kurzschlußstecker oder einen Codierstecker. Sobald die Einheit dies feststellt, wird die von der Zentralstation gesendete Adresse in der Einheit gespeichert.

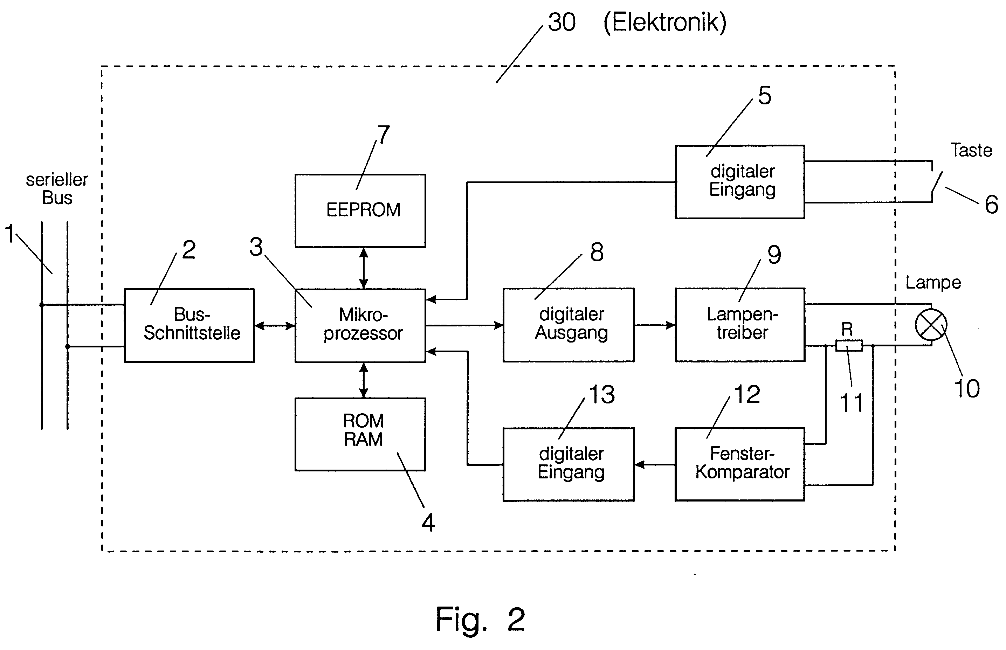

In Fig. 2 ist die Elektronik 30 einer der Einheiten im Detail gezeigt. Die Elektronik weist einen Lampentreiber 9 auf, der eine Strombegrenzungsschaltung enthalten kann. Im Stromkreis der Lampe 10 befindet sich ein Meßwiderstand 11, dessen Spannungsabfall von einem Fensterkomparator 12 festgestellt wird. Ist die Lampe 11 durch einen Kurzschlußstecker ersetzt oder überbrückt oder durch einen Widerstand mit einem vom Lampenwiderstand deutlich verschiedenen Widerstand ersetzt, so wird dies im Fensterkomparator 12 festgestellt und an den Mikroprozessor 3 der Elektronik 30 gemeldet.

Im übrigen arbeitet die Elektronik 30 wie folgt.

Die Busschnittstelle 2 nimmt die physikalische Ankopplung an den seriellen Bus 1 vor und beinhaltet ggf. die Trennung bzw. Aufschaltung der Daten von der/auf die Stromversorgung, sofern eine 2-polige Busleitung mit Überlagerung der Daten auf die Stromversorgung verwendet wird. Die Ankopplung der Busschnittstelle 2 über einen Brückengleichrichter an den seriellen Bus 1 schützt das System vor Schäden aufgrund falsch gepolter Anschlüsse der Busleitungen und erhält das System darüber hinaus bei beliebiger Anschlußpolarität voll funktionsfähig.

Der Mikroprozessor 3 steuert anhand von Programmen und Daten im Systemspeicher 4 den Funktionsablauf. Die Funktion von 3 und 4 kann ggf. auch von einem digitalen Schaltwerk übernommen werden. Die Taste 6 wirkt über den digitalen Eingang 5 auf den Mikroprozessor 3. Wenn statt einer Tasten- eine Schalterfunktion benötigt wird, kann unter Beibehaltung des mechanischen Tasters 6 mit dem Mikroprozessor 3 die Schalterfunktion nachgebildet werden. Damit der letzte Schaltzustand auch bei Stromausfall nicht verlorengeht, werden die Schaltzustandsänderungen in einen nichtflüchtigen Speicher EEPROM 7 eingeschrieben.

Ein Ansteuerbefehl für die Lampe wird vom Mikroprozessor 3 über den digitalen Ausgang 8 auf den Lampentreiber 9 gegeben. Dieser Lampentreiber begrenzt den Einschaltstrom der angeschlossenen Glühlampe 10. Am Widerstand 11 fällt eine dem Lampenstrom proportionale Spannung ab, die vom Fensterkomparator 12 in ein oder zwei digitale Signale umgeformt wird, welche über einen oder zwei digitale Eingänge 13 an den Mikroprozessor 3 weitergeleitet werden. Während der Ansteuerung der Lampe kann so festgestellt werden, ob der Lampenstrom mit einer bestimmten Toleranz dem Sollwert entspricht. Liegt er zu niedrig, so besteht im Lampenstromkreis eine Unterbrechung oder der Lampentreiber ist defekt. Liegt er zu hoch, so ist im Lampenstromkreis ein Kurzschluß vorhanden. Diese beiden Fehlerzustände können über den seriellen Bus 1 an die Zentraleinheit übermittelt werden, die dann z.B. eine Warnmeldung an den Bediener geben kann. Auf diese Art kann eine automatische Lampenprüfung realisiert werden.

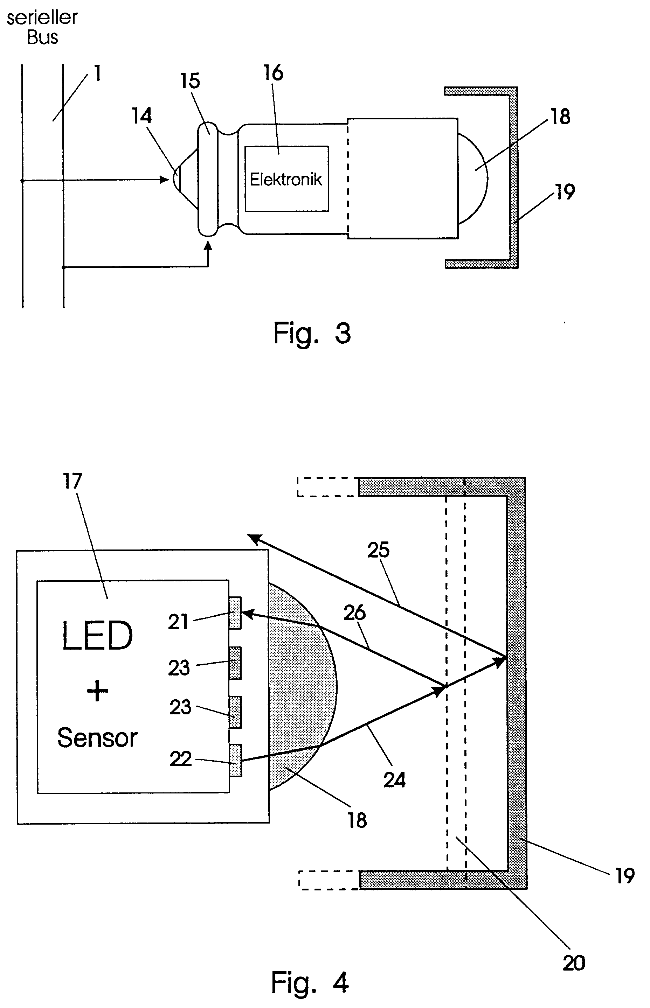

In Fig. 3 ist eine Ausführungsform gezeigt, bei der die Elektronik 16 im Gehäuse 15 einer Lampe eingebaut ist. Da auch die Versorgungsspannung über die beiden Leitungen des seriellen Bus 1 angelegt wird, können konventionelle Einheiten mit Lampenfassungen verwendet werden, in die anstelle der normalen Lampen die erfindungsgemäß mit Elektronik versehenen Lampen eingesetzt werden.

Die Lampe der Fig. 4 weist ebenfalls die Elektronik 16 auf. Vorne im in Fig. 4 nicht gezeigten Lampengehäuse befindet sich eine Schaltung 17, die mehrere LEDs 23 als Leuchtmelder aufweist, die durch eine optische Linse 18 ihr Licht auf die Haube 19 werfen. Um auch beleuchtbare Drucktasten ohne Modifikation am Bus betreiben zu können, wird die Bewegung der Druckhaube 19 optisch abgetastet. Hierzu befindet sich im Kopfteil 17 des Lampengehäuses eine weitere LED, vorzugsweise eine Infrarot-LED, so daß der Lichtstrahl für Menschen unsichtbar ist. Der von dieser LED 22 ausgesendete Lichtstrahl 24 wird von der nicht betätigten Druckhaube (bei 19 dargestellt) so reflektiert, daß der Strahl 25 nicht auf den Fotoempfänger 21 trifft. Wird die Druckhaube dagegen niedergedrückt, die Taste also betätigt (Stellung 20), so fällt der reflektierte Strahl 26 in den Fotoempfänger 21, so daß die Betätigung der Taste festgestellt wird und gemeldet werden kann.

Da bei dieser Ausführung die Lampe bzw. LED 23 nicht mehr direkt zugänglich ist, muß die Zuordnung einer Adresse zur Lampe folgendermaßen geschehen:
1. In der Zentraleinheit ist ein Lampensockel vorhanden. Im Konfigurationsmodus wird die aktuell von der Zentralstation gesendete Adresse von der Elektronik in der Lampe übernommen, wenn die Lampe in den Sockel der Zentralstation eingesteckt wird. Anschließend wird die so programmierte Lampe in die vorgesehene Taste oder Meldeleuchte eingesetzt.
oder
2. Mit einem Zusatzgerät, welches Infrarotlicht impulsförmig mit bestimmter Frequenz oder einem bestimmten Code aussendet, wird die in die Taste oder Meldeleuchte eingebaute Lampe bestrahlt. Der Fotoempfänger 21 empfängt das Impulsmuster. Die Elektronik 16 übernimmt die von der Zentralstation gesendete Adresse, wenn sich das System im Konfigurationsmodus befindet und das Impulsmuster erkannt wurde.

## Patentansprüche

1. Verfahren zum Einrichten eines Befehls-, Melde- und/oder Schaltgeräts mit Befehlseinheiten, Meldeeinheiten und/oder Schalteinheiten, die über ein Bussystem mit einer Zentralstation verbunden sind, bei dem jeder Befehls-, Melde- und/oder Schalteinheit eine Adresse zugeordnet wird, dadurch gekennzeichnet, daß die Zentralstation jeweils die der zu adressierenden Einheit entsprechende Funktion oder zuzuordnende Anschlußklemmen anzeigt, daß die Einheit betätigt und/oder manipuliert wird und daß daraufhin in diese Einheit die von der Zentralstation vorbestimmte Adresse eingespeichert wird.

2. Verfahren nach Anspruch 1, dadurch gekennzeichnet, daß zum Einrichten die Taster oder Schalter von Befehlseinheiten betätigt werden.

3. Verfahren nach Anspruch 1, dadurch gekennzeichnet, daß die Elektronik von Befehlseinheiten einen von Hand zu betätigenden Taster, Schalter oder dergleichen aufweist.

4. Verfahren nach Anspruch 1, dadurch gekennzeichnet, daß die Elektronik von Befehlseinheiten mit einer Kurzschlußbrücke versehen wird.

5. Verfahren nach einem der Ansprüche 1 bis 4, dadurch gekennzeichnet, daß zum Einrichten einer Meldeeinheit ein Signalgeber entfernt und/oder durch ein anderes Element ersetzt wird.

6. Verfahren nach einem der Ansprüche 1 bis 5, dadurch gekennzeichnet, daß zum Einrichten einer Meldeeinheit parallel zum Signalgeber ein anderes Element geschaltet wird.

7. Verfahren nach einem der Ansprüche 1 bis 6, dadurch gekennzeichnet, daß die zuzuordnende Funktion oder Anschlußklemme mit einer Lampe angezeigt wird.

8. Verfahren nach einem der Ansprüche 1 bis 6, dadurch gekennzeichnet, daß die zuzuordnende Funktion oder Anschlußklemme auf einer Klartextanzeige angezeigt wird.

9. Verfahren nach einem der Ansprüche 1 bis 8, dadurch gekennzeichnet, daß nur Einheiten mit einer voreingestellten, vorgegebenen Adresse mit einer neuen Adresse versehen werden.

10. Anlage zur Durchführung des Verfahrens nach einem der Ansprüche 1 bis 9, dadurch gekennzeichnet, daß die Stromversorgungsleitungen für die Einheiten (30) die Busleitungen (1) sind.

11. Befehls-, und/oder Meldeeinheit für ein Befehls-, Melde- und/oder Schaltgerät, die eine Lampe aufweist, dadurch gekennzeichnet, daß sie mit einer Elektronik (16) versehen ist, die im Lampengehäuse (15) angeordnet und über ein Bussystem (1) adressierbar ist.

12. Befehls- und Meldeeinheit mit einer Lampe und einer dieselbe abdeckenden, zur Betätigung in Richtung zur Lampe drückbaren Tastenkappe, die vor der Lampe angeordnet ist, dadurch gekennzeichnet, daß im Lampengehäuse (15) eine zur Kappe (19) hin strahlende Diode (22) mit zur Bewegungsrichtung der Kappe (19) schrägem Strahlengang sowie ein Detektor (21) für das Diodenlicht angeordnet sind, der nur Diodenlicht (26) bei betätigter Tastenkappe (20) empfängt.

13. Anlage nach einem der Ansprüche 10 bis 12, dadurch gekennzeichnet, daß die Einheiten über Brückengleichrichter mit den Busleitungen (1) verbunden sind.

14. Meldeeinheit zur Durchführung des Verfahrens nach einem der Ansprüche 1 bis 9, zur Verwendung in einer Anlage nach Anspruch 8 oder 11 oder nach einem der Ansprüche 9 oder 10, dadurch gekennzeichnet, daß sie Strombegrenzungsschaltungen (9) für die Lampen aufweisen.

15. Meldeeinheit nach Anspruch 14, dadurch gekennzeichnet, daß sie einen Fensterkomparator (12) für den Lampenstrom aufweisen.
